# EUROPEAN PATENT SPECIFICATION

(11) **EP 0 921 361 B1**
(45) Date of publication and mention of the grant of the patent: **08.02.2006**
(21) Application number: 98204125.3
(22) Date of filing: 04.12.1998
(51) Int. Cl.: F25B 29/00, B60H 1/00, F25B 41/00, F25D 31/00, F24D 15/04, F24F 5/00

(54) **Apparatus for heating and cooling**
Gerät zum Heizen und Kühlen
Appareil de chauffage et de refroidissement

(30) Priority: 05.12.1997 GB 9725689
(43) Date of publication of application: 09.06.1999
(73) Proprietor: Carver Technology Limited, Birmingham B2 5RS (GB)
(72) Inventor: Wright, Alan Thomas, Codsall Wood, Wolwerhampton WV8 1RQ (GB); Loakes, Graham Charles, Wombourne, Wolwerhampton WV5 8EZ (GB)
(74) Representative: Hill, Richard

(56) References cited:
- EP-A- 0 633 434
- FR-A- 2 728 661
- GB-A- 2 233 080
- US-A- 2 813 683
- US-A- 4 112 705
- US-A- 4 134 448
- US-A- 4 599 870
- US-A- 4 909 041
- US-A- 4 918 933
- US-A- 4 946 096

## Description

The invention concerns apparatus for heating and cooling fluids such as air and water, for use in habitations, especially relatively small habitations such as touring and static caravans, mobile homes, chalets, lodges, cabins, holiday homes, park homes, site homes, offices and like structures.

Such habitations are often sited or used in a manner which imposes constraints upon the supply and kinds of fuel available to power heating and cooling apparatus, and in relatively small habitations the space available for the apparatus may be severely restricted. Furthermore, some such small habitations, e.g. caravans, mobile homes and especially motor caravans may be subject to weight restrictions, and limitations upon the weight of such apparatus.

It is known to employ electrically powered air conditioning units in such habitations, but the electrical power requirements of such units are measured in kilowatts and this amount of power can only be supplied by the usual mains or by dedicated motor driven generators which many people, e.g. campers, find unacceptably noisy.

It is also known to provide hot water for such small habitations by burning stored fuel gas, e.g. liquid petroleum gas (L.P.G.), propane and butane stored at pressures at which they remain liquid, to heat a water boiler. Small lightweight boilers are readily available for the caravan market, as are equivalent small lightweight gas fuelled air heaters. However, the above space and weight constraints limit the amount of stored gas available.

Furthermore, the cost of stored gas is high in comparison with the cost of mains electricity, so that in static forms of such structures it is more convenient and usual to provide electric space heating instead of providing several gas fuelled space heaters or installing a usual form of domestic mains gas fired central heating (employing a radiator connected into a heated water circulation system) with the burner and controls modified to run on stored gas. The weight of the radiators and water circulation system is so great, because of the mass of the water contained in the system, that such systems are not well suited for use in mobile habitations. Further, for habitations subject to no or intermittent occupation in the winter, the water in the system must contain antifreeze and corrosion inhibitors to avoid the need to drain and refill the system.

A proposal for an add-on refrigerant boiler for an electric heat heat pump and a water heating system which includes a gas fired boiler is disclosed in US-A-4918933

It is an object of the present invention to address the problems arising from the aforementioned limitations and constraints.

According to the present invention there is provided apparatus for heating and cooling fluids in a habitation comprising an air cooling system and a water heating system; wherein the air cooling system includes a refrigeration unit to cool a refrigerant and a circulation means to circulate the cooled refrigerant through an interior heat exchanger in which the refrigerant is heated by absorption of heat, for cooling the air in the habitation; wherein the water heating system includes a gas fired boiler; wherein the said systems are linked by a sub-circuit of the circulation means which is valve controlled both to circulate the refrigerant through a further heat exchanger to absorb heat from the water in the boiler for emission through the interior heat exchanger to heat the air in the habitation, and to substantially isolate the flow in said sub-circuit from the refrigeration unit, and wherein the water heating system and sub-circuit are both operable by a low voltage DC electrical control system.

Preferably the refrigeration unit comprises a compressor to compress a refrigerant from a gaseous state to a liquid state and circulation means to circulate the refrigerant through a waste-heat heat exchanger to cool the liquid refrigerant. In this case, the sub circuit is preferably valve controlled both to circulate the refrigerant through a further heat exchanger to absorb heat from the water in the boiler for emission through the interior heat exchanger to heat the air in the habitation, and to substantially isolate the flow in said sub-circuit from the compressor and waste-heat heat exchanger.

The apparatus of the invention enables fuel utilisation to be optimised, space and weight requirements to be minimised, and gives maximum utility to the user according to the availability of the required power and fuel. Such small static habitations are commonly sited in locations subject to non-availability of mains electricity or frequent interruptions of the mains electricity supply, but the apparatus, if provided with a DC 12 (or even 6 or 24) volt rechargeable battery and stored gas, e.g. LPG, can maintain heating of both space and water during such interruptions. Furthermore, the cost of the apparatus can be minimised because the apparatus is suitable for both static and mobile habitations, sales can be achieved in both markets to give the economics of scale that mass-production makes possible.

Additionally, the apparatus allows heating of a habitation to be effected with relatively little noise, as, say, compared with running an air conditioning unit as a heat pump. Utilization of the boiler for both air and water heating leads to a saving of both materials and weight. These advantages are of particular benefit where the apparatus is to be used in a caravan or other mobile habitations.

The interior heat exchanger is preferably provided with an electrically driven fan to propel interior air therethrough, so that cooled air can be driven upwards to reduce stratification in the habitation.

The gas fired boiler is preferably also provided with a mains electricity powered immersion heater, to provide heating when mains electricity is available, to enable the user to economise upon the consumption of stored gas.

The sub circuit may include a pump, preferably a 12V electrically operated pump, to circulate refrigerant through the further heat exchanger and the interior heat exchanger. Alternatively, or additionally, the sub circuit could be arranged so that refrigerant circulates between the further and interior heat exchangers on the thermosyphon principle. Essentially, this means placing the interior heat exchanger above the further heat exchanger and, hence, boiler.

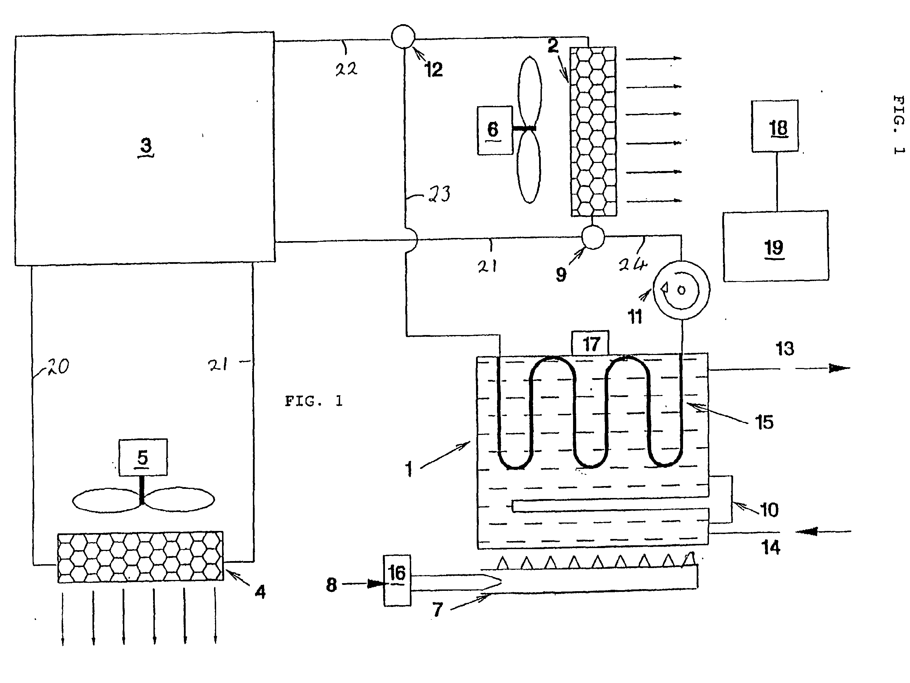

The invention will be described further, by way of example with reference to the accompanying diagrammatic drawings, wherein:-
FIGURE 1 is a general arrangement diagram of an embodiment apparatus of the invention, and
FIGURE 2 is a diagram showing the primary electrical control inputs and outputs to and from a control unit of the apparatus.

The apparatus includes a water boiler 1 having a supply water inlet 14 and a hot water outlet 13. The boiler may be heated by a burner 7 having a gas control valve, ignitor and flame sensor unit 16 to control the input of gas via a supply line 8 from a store of gas (not shown); and may be heated by a mains electrical immersion heater 10. The boiler 1 is fitted with a thermostat 17 and a heat absorption coil 15.

The apparatus also includes an air cooling system including an internal heat exchanger 2 through which internal air in a habitation may be driven by a 12 volt DC powered fan unit 6; and connected via a circulation means comprising fluid lines 21 and 22 to a compressor 3 powered by a 230V mains electrical supply to propel hot refrigerant fluid via line 20 to a waste-heat exchanger 4 through which external air can be propelled by a 230V mains powered fan unit 5, a line 21 to convey cooled refrigerant fluid via a change over valve 9 to the interior heat exchanger 2 (to absorb heat from the interior air) and a return line 22 to return the refrigerant to the compressor 3 via a further change over valve 12.

The apparatus further includes a heating sub-circuit for circulation of the refrigerant through the heat absorption coil 15 and the internal heat exchanger 2 by a 12V DC pump 11 via heating feed and return lines 23 and 24 controlled by the change over valves 9 and 12 to isolate the sub-circuit from the compressor 3 and waste heat exchanger 4.

In an alternative embodiment, the pump 11 is deleted and the refrigerant is allowed to circulate between the coil 15 and heat exchanger 2 on the thermosyphon principal. That is, the refrigerant, when in the coil, expands causing it to be displaced by the denser fluid in other parts of the sub circuit and hence to rise to the interior heat exchanger 2 whereupon heat is dispersed, the refrigerant cools and then returns to the coil 15. This principal is well understood, but it is noted that to work effectively it is necessary for the internal heat exchanger 2 to be placed above the coil 15, it may also be necessary to modify the form of the coil and heat exchanger from those shown, to allow for free circulation of refrigerant.

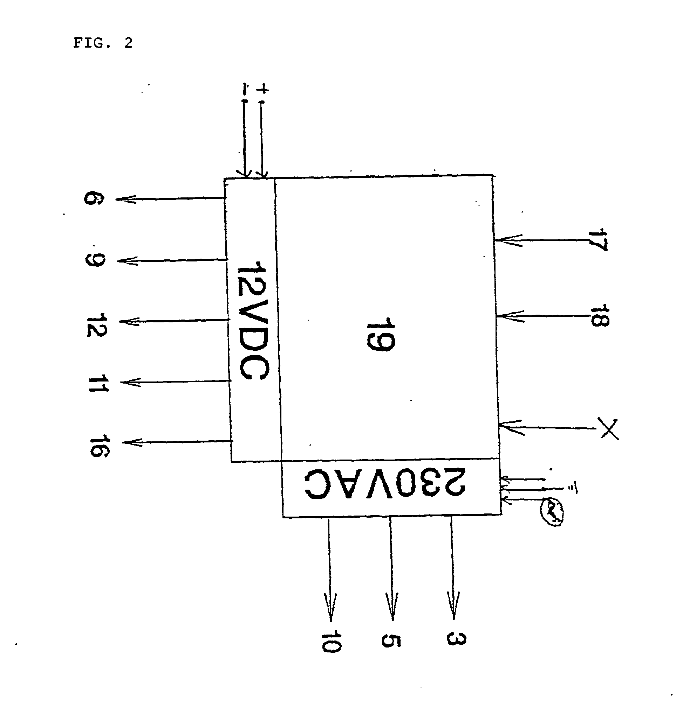

The apparatus is provided with a control unit 19 and a room thermostat 18 both of which are manually programmable or presettable. The control unit 19 receives inputs from the thermostats 17 and 18 and inputs X from safety sensors (not shown) but known from established practice with heaters for caravans, e.g. overheat, flame failure, low gas pressure and like sensors, and safety sensors for the compressor and refrigerant fluid etc (as known from air conditioning units), as well as 12V DC and mains electricity supplies. The control unit provides mains outputs for the compressor 3, the fan unit 5 and the immersion heater 10 and 12V DC outputs for the fan unit 6, the valves 9 and 12, the pump 11 (where required) and the burner control unit 16. (In FIGURE 2 the outputs are identified by the same reference numbers as those which identify the items which they energise).

The control unit and thermostat 18 determine from the difference between the actually existing sensed temperature and the user selected desired temperature whether space heating or space cooling is required and control the apparatus accordingly.

When mains electricity is available and cooling is required for the interior of the habitation, the control unit 19 energises the outputs 3, 5 and 6; if hot water is also required the output 10 is energised. In the event of the heating of the supply of hot water being insufficient, the output 16 may also be energised to further heat the boiler by employing the burner 7 to provide additional heat.

When mains electricity is available and space heating is required, the control unit 19 energises outputs 6, 9, 10, 11 (where required), 12 so that the sub-circuit extracts heat from the boiler and emits it into the habitation via the heat exchanger 2 using the refrigerant as a heat transport medium. Additional heat may be provided by energising output 16 also.

When mains electricity is not available, output 16 may be energised to provide water heating, and outputs 6, 9, 11 (where required) and 16 may be energised to provide space heating as well as water heating.

The invention is not confined to details of the foregoing example, and many variations and modifications are possible within the scope of the invention. For example, additional valve means and accumulators may be provided to ensure that the sub-circuit has a sufficient charge of refrigerant for efficient heat transport, and to avoid pressure locks and to reduce operational noise. A heat exchanger may be switchable into the water supply line 14 to the boiler to absorb heat from the line 20 or the waste heat exchanger 4 to pre-heat the boiler feed water. The compressor may be replaced by any other suitable form of refrigeration unit, e.g. an absorption refrigeration unit.

## Claims

1. Heating and cooling apparatus for heating and cooling fluids in a habitation comprising an air cooling system (2, 3, 21, 22) and a water heating system (1, 16, 14); wherein the air cooling system includes a refrigeration unit (3, 4, 20, 25) to cool a refrigerant and a circulation means (3) to circulate the cooled refrigerant through an interior heat exchanger (2) in which the refrigerant is heated by absorption of heat for cooling the air in the habitation; wherein the water heating system includes (1, 13, 14) a gas fired boiler (1); and wherein the said systems are linked by a sub-circuit (23, 24) of the circulation means which is valve controlled (9, 12) both to circulate the refrigerant through a further heat exchanger (15) to absorb heat from the water in the boiler for emission through the interior heat exchanger (2) to heat the air in the habitation, and to substantially isolate the flow in said sub-circuit from the refrigeration unit (3, 4, 20, 25) **characterised by** a low voltage DC electrical control system (19) whereby the water heating system and sub circuit are both operable by said system.

2. Heating and cooling apparatus as claimed in claim 1, **characterised in that** the refrigeration unit comprises a compressor (3).

3. Heating and cooling apparatus as claimed in any preceding claim, **characterised in that** the interior heat exchanger (21) is provided with an electrically driven fan (6).

4. Heating and cooling apparatus as claimed in any preceding claim, **characterised in that** the gas fired boiler is also provided with an electric immersion heater (10).

5. Heating and cooling apparatus as claimed in any preceding claim, **characterised in that** the sub circuit includes a pump (11).

6. Heating and cooling apparatus as claimed in any preceding claim, **characterised in that** the sub circuit (23, 24) is arranged so that refrigerant circulates between the further (15) and interior (2) heat exchangers on the thermosyphon principal.

7. Heating and cooling apparatus as claimed in any preceding claim **characterised in that** it further comprises a room thermostat (18).

8. Heating and cooling apparatus as claimed in any proceeding claim, **characterised in that** the control unit (19) provides a mains electricity output for the compressor and a 12V DC output for controlling the boiler.

9. The use of heating and cooling apparatus according to any preceding claim in a caravan or other mobile habitation.

## Patentansprüche

1. Heiz- und Kühlgerät zum Heizen und Kühlen von Fluiden in einer Wohnstätte mit einem Luftkühlsystem (2, 3, 21, 22) und einem Wasserheizsystem (1, 16, 14); bei welchem das Luftkühlsystem eine Kühleinheit (3, 4, 20, 25) aufweist, um ein Kühlmittel zu kühlen, und eine Zirkulationseinrichtung (3), um das gekühlte Kühlmittel durch einen Innenwärmetauscher (2) zu zirkulieren, in welchem das Kühlmittel durch Aufnahme von Wärme zum Kühlen der Luft in der Wohnstätte aufgeheizt wird; bei welchem das Wasserheizsystem (1, 13, 14) einen gasbefeuerten Boiler (1) einschließt; und bei welchem die genannten Systeme durch einen Unter-Kreis (23, 24) der Zirkulationseinrichtung miteinander verbunden sind, welcher ventilgesteuert (9, 12) ist, um sowohl das Kühlmittel durch einen weiteren Wärmetauscher (15) zu zirkulieren, um Wärme von dem Wasser in dem Boiler zur Emission durch den Innenwärmetauscher (2) aufzunehmen, um die Luft in der Wohnstätte zu erwärmen, als auch den Strom in dem genannten Unter-Kreis von der Kühleinheit (3, 4, 20, 25) im Wesentlichen zu isolieren, **gekennzeichnet durch** ein elektrisches Niederspannungsgleichstrom-Kontrollsystem (19), wodurch das Wasserheizsystem und der Unter-Kreis beide **durch** das genannte System operabel sind.

2. Heiz- und Kühlgerät nach Anspruch 1, **dadurch gekennzeichnet, dass** die Kühleinheit einen Kompressor (3) enthält.

3. Heiz- und Kühlgerät nach einem der vorhergehenden Ansprüche, **dadurch gekennzeichnet, dass** der Innenwärmetauscher (2) mit einem elektrisch betriebenen Ventilator (6) ausgestattet ist.

4. Heiz- und Kühlgerät nach einem der vorhergehenden Ansprüche, **dadurch gekennzeichnet, dass** der gasbefeuerte Boiler auch mit einem elektrischen Eintaucherhitzer (10) ausgestattet ist.

5. Heiz- und Kühlgerät nach einem der vorhergehenden Ansprüche, **dadurch gekennzeichnet, dass** der Unter-Kreis eine Pumpe (11) einschließt.

6. Heiz- und Kühlgerät nach einem der vorhergehenden Ansprüche, **dadurch gekennzeichnet, dass** der Unter-Kreis (23, 24) so angeordnet ist, dass Kühlmittel zwischen dem weiteren (15) und dem Innenwärmetauscher (2) nach dem Thermosyphon-Prinzip zirkuliert.

7. Heiz- und Kühlgerät nach einem der vorhergehenden Ansprüche, **dadurch gekennzeichnet, dass** er weiterhin einen Raumthermostaten (14) aufweist.

8. Heiz- und Kühlgerät nach einem der vorhergehenden Ansprüche, **dadurch gekennzeichnet, dass** die Kontrolleinheit (19) einen Hauptelektrizitätsausgang für den Kompressor und einen 12V Gleichstromausgang zum Kontrollieren des Boilers vorsieht.

9. Verwendung eines Heiz- und Kühlgerätes nach einem der vorhergehenden Ansprüche in einem Wohnwagen oder einer sonstigen mobilen Wohnstätte.

## Revendications

1. Appareil de chauffage et de refroidissement pour chauffer et refroidir des fluides dans une habitation, comprenant un système de refroidissement de l'air (2, 3, 21, 22) et un système de chauffage de l'eau (1, 16, 14) ; dans lequel le système de refroidissement de l'air comprend une unité de réfrigération (3, 4, 20, 25) pour refroidir un réfrigérant et des moyens de circulation (3) pour faire circuler le réfrigérant refroidi à travers un échangeur de chaleur intérieur (2) dans lequel le réfrigérant est chauffé par absorption de chaleur pour refroidir l'air dans l'habitation ; dans lequel le système de chauffage de l'eau comprend (1, 13, 14) une chaudière au gaz (1) ; et dans lequel lesdits systèmes sont reliés par un circuit secondaire (23, 24) des moyens de circulation qui est régulé par vannes (9, 12) à la fois pour faire circuler le réfrigérant à travers un échangeur de chaleur éloigné (15) pour absorber la chaleur de l'eau dans la chaudière afin de permettre son émission à travers l'échangeur de chaleur intérieur (2) pour chauffer l'air dans l'habitation, et pour isoler sensiblement le flux dans ledit circuit secondaire vis-à-vis de l'unité de réfrigération (3, 4, 20, 25), **caractérisé par** un système de commande électrique en courant continu à basse tension (19) de telle manière que le système de chauffage de l'eau et le circuit secondaire peuvent tous deux être pilotés par ledit système (19).

2. Appareil de chauffage et de refroidissement selon la revendication 1, **caractérisé en ce que** l'unité de réfrigération comprend un compresseur (3).

3. Appareil de chauffage et de refroidissement selon une quelconque revendication précédente, **caractérisé en ce que** l'échangeur de chaleur intérieur (2) est équipé d'un ventilateur entraîné par moteur électrique (6).

4. Appareil de chauffage et de refroidissement selon une quelconque revendication précédente, **caractérisé en ce que** la chaudière au gaz est également équipée d'une résistance immergée électrique (10).

5. Appareil de chauffage et de refroidissement selon une quelconque revendication précédente, **caractérisé en ce que** le circuit secondaire comprend une pompe (11).

6. Appareil de chauffage et de refroidissement selon une quelconque revendication précédente, **caractérisé en ce que** le circuit secondaire (23, 24) est agencé de telle manière que le réfrigérant circule entre les échangeurs de chaleur éloigné (15) et intérieur (2) suivant le principe du thermosiphon.

7. Appareil de chauffage et de refroidissement selon une quelconque revendication précédente, **caractérisé en ce qu'**il comprend en outre un thermostat d'ambiance (18).

8. Appareil de chauffage et de refroidissement selon une quelconque revendication précédente, **caractérisé en ce que** l'unité de commande (19) produit une sortie en électricité secteur pour le compresseur et une sortie en courant continu 12 volts pour commander la chaudière.

9. Utilisation de l'appareil de chauffage et de refroidissement selon une quelconque revendication précédente dans une caravane ou une autre habitation mobile.
